# EUROPEAN PATENT APPLICATION

(11) **EP 4 691 672 A1**
(43) Date of publication of application: **11.02.2026**
(21) Application number: 25192365.2
(22) Date of filing: 29.07.2025
(51) Int. Cl.: B23B 31/20, B23B 31/26, B23B 47/00, B23Q 1/70, B23Q 5/027

(54) **MACHINE TOOL**

(30) Priority: 08.08.2024 JP 2024131941; 13.06.2025 JP 2025099354
(71) Applicant: Sugino Machine Limited, Namerikawa City, Toyama 936-8577 (JP)
(72) Inventor: TAMURA, Ayumu, Namerikawa City, Toyama 936-8577 (JP)
(74) Representative: Global IP Europe Patentanwaltskanzlei

(57) **Abstract**

A machine tool (10) includes: a frame (11); a hollow ram (21) disposed on the frame (11) in a reciprocable manner; a hollow spindle (23) to which a tool (1) is mountable, rotatably supported by the ram (21), and having a lever hole (23c) penetrating the spindle (23) in a radial direction and extending in an axial direction; a drawbar (24) including a collet (28), reciprocate in the spindle (23), and urged toward a basal end of the spindle (23); a lever (30) connected to the drawbar (24) and extending radially outward of the spindle (23) through the lever hole (23c); a trigger (35) fixed to the frame (11); a feed unit (38) that reciprocates the ram (21), advances the ram (21) toward a distal end to machine a workpiece, and retracts the ram (21) toward a basal end to bring the lever (30) into contact with the trigger (35) for the drawbar (24) to advance with respect to the spindle (23) to open the collet (28).

## Description

### BACKGROUND

### 1. Technical Field

The present invention relates to a machine tool.

### 2. Description of the Background

For example, a drilling machine disclosed in JP 2022-071706 A is known. The drilling machine includes a frame, a linear guide, a slider, a ram, a spindle, a spindle motor, a feed screw, and a feed motor.

The frame includes a linear guide support plate having a reference surface, a ram support plate having a ram guide hole, and a motor support portion. The linear guide is disposed on the reference surface. The slider reciprocates along the linear guide. The ram, which is disposed on the slider, penetrates the ram guide hole. The spindle is rotatably supported within the ram. The spindle motor is connected to the spindle. The feed screw includes a nut disposed on the slider, a screw shaft having one end supported by the motor support portion and the other end being a free end. The feed motor is connected to the screw shaft.

### BRIEF SUMMARY

An object of the present invention is to provide a machine tool capable of replacing a tool with a simple structure.

A first aspect of the present invention provides a machine tool, including:
a frame;
a hollow ram disposed on the frame in a reciprocable manner;
a hollow spindle to which a tool is mountable, the spindle rotatably supported by the ram, the spindle having a lever hole penetrating the spindle in a radial direction and extending in an axial direction;
a drawbar including a collet, the drawbar configured to reciprocate in the spindle, the drawbar configured to be urged toward a basal end of the spindle;
a lever connected to the drawbar, the lever extending radially outward of the spindle through the lever hole;
a trigger fixed to the frame;
a feed unit configured to reciprocate the ram, the feed unit configured to advance the ram toward a distal end to machine a workpiece, the feed unit configured to retract the ram toward a basal end to bring the lever into contact with the trigger for the drawbar to advance with respect to the spindle to open the collet.

The machine tool may be mounted on a robot arm or a slide. The machine tool rotates the spindle, feeds the ram, and performs milling, drilling, and tapping operations.

The trigger may be a trigger block extending in a plane perpendicular to the spindle. The trigger block may be disposed between the spindle and the ram.

Preferably, the spindle is supported by the ram at three points: a distal end portion, a central portion, and a basal end portion of the spindle. The support position at the central portion of the spindle may be closer to the distal end than the unclamp ring. The spindle is supported by the ram via a spindle bearing.

The guide block may be integral with the spindle.

The machine tool may include an elastic member that urges the drawbar toward the basal end with respect to the spindle. The elastic member may be disposed between the draw shaft and an elastic member chamber. The elastic member may also be disposed between the draw block and the elastic member chamber.

The spindle drive shaft is coaxially disposed with the spindle. The spindle drive shaft extends along the center axis of the spindle.

The unclamp ring has a contact surface that contacts the trigger. The contact surface is disposed at the basal end portion of the unclamp ring.

The lever may have a contact surface (first contact surface) that contacts the trigger. The first contact surface is disposed at the basal end portion of the lever. The first contact surface may be a flat surface. The first contact surface is parallel to a plane perpendicular to the direction of the spindle.

The trigger may have a contact surface (second contact surface) that contacts the lever. The second contact surface is disposed at the distal end portion of the trigger. The second contact surface may be a flat surface. The second contact surface is parallel to a plane perpendicular to the direction of the spindle.

The trigger ring may be divided into multiple parts. The divided trigger ring may be arranged with a radial gap. The trigger ring may include the second contact surface.

According to the present invention, it is possible to provide a machine tool capable of replacing a tool with a simple structure.

### BRIEF DESCRIPTION OF DRAWINGS

FIG. 1 is a longitudinal sectional view of a machine tool according to a first embodiment.
FIG. 2 is a view taken along arrow II in FIG. 1.
FIG. 3 is a sectional view taken along line III-III in FIG. 1.
FIG. 4 is a longitudinal sectional view of a machine tool according to a second embodiment.
FIG. 5 is a sectional view taken along line V-V in FIG. 4.
FIG. 6 is a sectional view taken along line VI-VI in FIG. 4.
FIG. 7 is a sectional view of a machine tool according to a third embodiment.
FIG. 8 is a view taken along arrow VIII in FIG. 7.
FIG. 9 is a sectional view taken along line IX-IX in FIG. 7.
FIG.10 is a sectional view of a machine tool according to a fourth embodiment.
FIG.11 is a sectional view of a machine tool according to a fifth embodiment.
FIG.12 is a sectional view taken along line XII-XII in FIG.11.
FIG.13 is a sectional view taken along line XIII-XIII in FIG.11.

### DETAILED DESCRIPTION

### First Embodiment

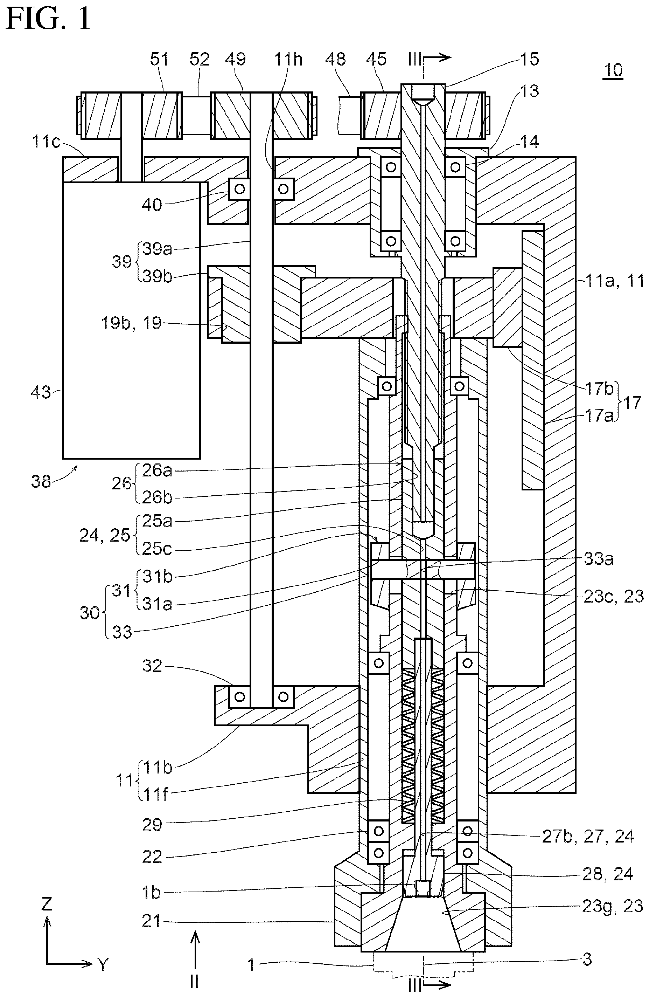

As shown in FIGS. 1 to 3, a machine tool 10 according to the present embodiment includes a frame 11, a linear guide 17, a connection block 19, a housing 13, a bearing 14, a drive shaft (spindle drive shaft) 15, a ram 21, a spindle bearing 22, a spindle 23, a drawbar 24, a guide block 26, a lever 30, a feed unit 38, a spindle motor 41, a driving pulley (second driving pulley) 47, a driven pulley (second driven pulley) 45, and an endless belt (second endless belt) 48.

The feed unit 38 includes a feed screw 39, a bearing 32, a feed motor 43, a driving pulley (first driving pulley) 51, a driven pulley (first driven pulley) 49, and an endless belt (first endless belt) 52.

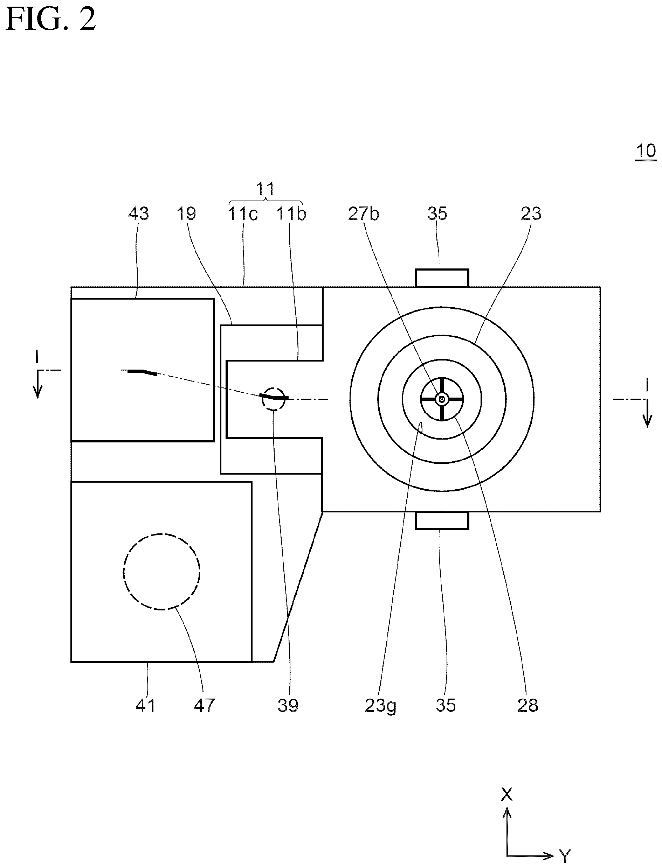

FIG. 1 is a combined sectional view taken along line I-I in FIG. 2. The line I-I connects a center axis 3 of the spindle 23, a center axis of the feed screw 39, and a center of an output shaft of the feed motor 43.

The upward direction in FIG. 1 is defined as a basal end direction (+Z). The downward direction in FIG. 1 is defined as a distal end direction (-Z). For convenience, a rightward direction in FIG. 1 is defined as a downward direction (+Y). The leftward direction in FIG. 1 is defined as an upward direction (-Y). A direction perpendicular to the plane of the paper in FIG. 1 is defined as a lateral direction (X).

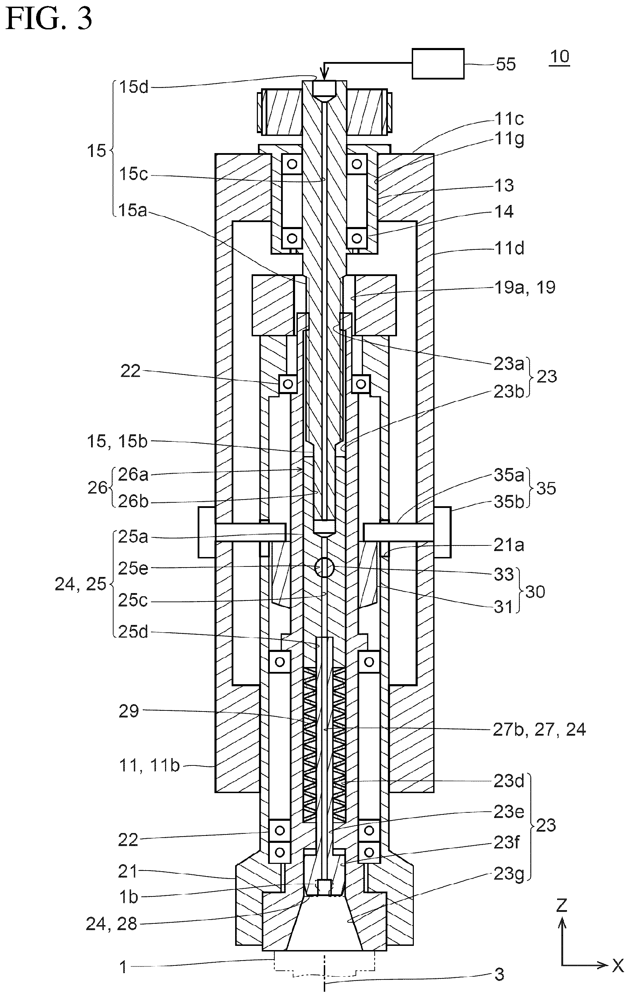

The frame 11 is box-shaped. The frame 11 includes a base plate 11a, a ram support plate 11b, a drive shaft support plate 11c, and a side plate 11d (see FIG. 3). The ram support plate 11b has a ram hole 11f. The drive shaft support plate 11c has a housing hole 11g (see FIG. 3) and a screw support hole 11h. The ram hole 11f and the housing hole 11g extend along the center axis 3.

The linear guide 17 includes a linear rail 17a and a linear block 17b. The linear rail 17a, which extends parallel to the center axis 3, is disposed on the base plate 11a. The linear block 17b reciprocates on the linear rail 17a.

The connection block 19 connects the ram 21, the feed screw 39, and the linear block 17b. The connection block 19 reciprocates integrally with the ram 21 on the linear guide 17. The connection block 19 is rectangular plate-shaped. The connection block 19 has a lower end fastened to the linear block 17b. The connection block 19 includes a drive shaft hole 19a and a nut hole 19b. The drive shaft hole 19a is located at a lower part of the connection block 19. The nut hole 19b is located at an upper part of the connection block 19. The drive shaft hole 19a, which extends along the center axis 3, penetrates the connection block 19.

As shown in FIG. 1, the housing 13, which is a hollow cylindrical body, is disposed in the housing hole 11g. Preferably, the housing 13 is insertable into the housing hole 11g from the basal end direction (+Z direction). The housing 13 supports the drive shaft 15 via the bearing 14. The housing 13 may be integral with the drive shaft support plate 11c. The housing 13, the bearing 14, and the drive shaft 15 is removable from the frame 11 as a unit.

As shown in FIG. 3, the drive shaft 15 includes a spline shaft 15a, a support shaft 15b, a coolant channel (first coolant channel) 15c, and a supply port (coolant supply port) 15d. The drive shaft 15, which extends along the center axis 3, penetrates the drive shaft hole 19a. The drive shaft 15 has a basal end supported by the housing 13. The basal end of the drive shaft 15 protrudes toward the basal end direction beyond the housing 13 and the drive shaft support plate 11c. The spline shaft 15a is located in the central part of the drive shaft 15 in the axial direction. The support shaft 15b is disposed at a distal end of the drive shaft 15. The support shaft 15b has a right cylindrical shape. The coolant channel 15c, which extends along the center axis 3, penetrates the drive shaft 15. The supply port 15d, which is located at the basal end of the drive shaft 15, is connected to the coolant channel 15c. The supply port 15d is, for example, a female screw for pipe.

The ram 21, which is a hollow cylindrical body, extends along the center axis 3. The ram 21 has a basal end fastened to the connection block 19. The ram 21 has a distal end that penetrates the ram hole 11f. The ram 21 slides in the axial direction within the ram hole 11f. The ram 21 reciprocates integrally with the connection block 19. As shown in FIG. 3, the ram 21 includes a trigger hole 21a. The trigger hole 21a is arranged on a plane extending in a lateral direction (ZX plane). The plane extending in the lateral direction (ZX plane) is a plane passing through the center axis 3 and extending in the lateral direction. The trigger hole 21a penetrates the ram 21 in a radial direction. The trigger hole 21a is an elongated hole extending in the axial direction.

The spindle 23, which is a hollow cylindrical body, extends along the center axis 3. The spindle 23 is supported by the ram 21 via the spindle bearing 22. As shown in FIG. 3, the spindle 23 includes, in order from the basal end: a spline hole 23a, a drive shaft chamber 23b, a lever hole 23c, a spring chamber (elastic member chamber) 23d, a through hole 23e, a collet chamber 23f, and a spindle hole 23g. The spline hole 23a engages with the spline shaft 15a. The drive shaft chamber 23b is connected to the spline hole 23a and the spring chamber 23d. The lever hole 23c is located in a middle portion of the spindle 23. When a rotational phase of the spindle 23 is at origin, the lever hole 23c penetrates the spindle 23 in the lateral direction. The lever hole 23c extends along the axial direction of the spindle 23. The spindle hole 23g is connected to the collet chamber 23f. The through hole 23e connects the collet chamber 23f and the spring chamber 23d.

A tool 1 is attached to the spindle hole 23g. The tool 1 includes a stud bolt 1b.

The guide block 26 is a hollow right cylinder. The guide block 26 includes an outer surface 26a and a guide hole 26b. The outer surface 26a, which contacts the inner surface of the drive shaft chamber 23b, slides in the axial direction. The guide hole 26b contacts an outer surface of the support shaft 15b. The guide hole 26b slides with the support shaft 15b in an axial direction. The support shaft 15b is supported by the spindle 23 via the guide block 26. The guide hole 26b forms part of the second coolant channel.

The drawbar 24 is disposed at the distal end of the spindle 23. The drawbar 24 reciprocates inside the spindle 23. The drawbar 24 includes a draw block 25, a draw shaft 27, and a collet 28.

As shown in FIG. 3, the draw block 25 is a hollow cylinder. The draw block 25 includes a body 25a, a shaft support hole 25d, a coolant channel (second coolant channel) 25c, and a pin fixing hole 25e.

The body 25a is connected to the guide block 26. The shaft support hole 25d and the coolant channel 25c extend along the center axis 3. The shaft support hole 25d, which is located at the distal end of the body 25a, opens at the distal end of the body 25a. The coolant channel 25c connects the guide hole 26b and the shaft support hole 25d. The pin fixing hole 25e, which extends in a radial direction, penetrates the body 25a. The pin fixing hole 25e is a cylindrical hole.

The draw shaft 27 is a hollow cylindrical body. The draw shaft 27, which penetrates the through hole 23e, is fastened to the shaft support hole 25d. The draw shaft 27 includes a coolant channel (second coolant channel) 27b.

The collet 28 grips the stud bolt 1b of the tool 1. The collet 28 is disposed at the distal end of the draw shaft 27. The collet 28 is disposed in the collet chamber 23f.

The disc spring 29 is disposed in the spring chamber 23d. The disc spring 29 urges the drawbar 24 toward the basal end.

The lever 30 includes an unclamp ring 31 and a ring pin 33.

The unclamp ring 31, which is a hollow cylindrical body, is disposed at the central portion of the spindle 23. The unclamp ring 31 may slide on the outer circumferential surface of the spindle 23. As shown in FIG. 1, the unclamp ring 31 includes a pin hole 31a and a contact surface 31b. The pin hole 31a, which extends in a radial direction, penetrates the unclamp ring 31. The contact surface 31b is located at a rear end of the unclamp ring 31.

The ring pin 33 is disposed penetrating the pin hole 31a, the lever hole 23c, and the pin fixing hole 25e. The ring pin 33 connects the drawbar 24 and the unclamp ring 31. The ring pin 33 includes a coolant channel (second coolant channel) 33a (see FIG. 1). The ring pin 33 reciprocates within the lever hole 23c integrally with the drawbar 24 and the unclamp ring 31.

As shown in FIG. 3, a pair of unclamp pins (triggers) 35 extend toward the center axis 3 from the left and right (X direction). The unclamp pin 35 includes a head 35b and a pin 35a. The head 35b is fixed to the side plate 11d. The pin 35a is disposed on a ZX plane passing through the center of the spindle 23. The unclamp pin 35 has a circular or rectangular cross-section. The pin 35a penetrates the trigger hole 21a to protrude into the ram 21. When the ram 21 retracts, the pin 35a contacts the contact surface 31b.

As shown in FIG. 1, the feed motor 43 is mounted on the drive shaft support plate 11c. The driving pulley 51 is connected to the feed motor 43. The feed screw 39 includes a screw shaft 39a and a nut 39b. The screw shaft 39a is supported by the ram support plate 11b via the bearing 32. The screw shaft 39a is supported by the drive shaft support plate 11c via the bearing 40. The nut 39b is inserted into the nut hole 19b to be fastened to the connection block 19. The basal end of the screw shaft 39a protrudes rearward of the drive shaft support plate 11c. The driven pulley 49 is fastened to the basal end of the screw shaft 39a. The endless belt 52 is stretched between the driving pulley 51 and the driven pulley 49.

As shown in FIG. 2, the spindle motor 41 is mounted on the drive shaft support plate 11c. The driving pulley 47 is connected to the spindle motor 41. The driven pulley 45 is disposed at the basal end of the drive shaft 15. The endless belt 48 is stretched between the driving pulley 47 and the driven pulley 45.

As shown in FIG. 3, a coolant device 55 is connected to the supply port 15d. The coolant device 55 supplies coolant to the machine tool 10. The coolant may be, for example, liquid coolant, mist coolant, or gas coolant.

The tool 1 is mounted in the spindle hole 23g by a tool changer (not shown), a robot (not shown), or an operator.

When the feed unit 38 feeds the ram 21 in the forward direction, the drawbar 24 is pulled toward the basal end by the disc spring 29. As a result, the collet 28 grips the stud bolt 1b to press the tool 1 against the spindle hole 23g.

When the feed unit 38 further advances the ram 21, the tool 1 mounted on the spindle 23 machines a workpiece. The tool 1 performs, for example, milling, drilling, or tapping operations.

When the feed unit 38 retracts the ram 21, the contact surface 31b contacts the unclamp pin 35. As the feed unit 38 continues to retract the ram 21, the unclamp ring 31 is pressed by the unclamp pin 35. The drawbar 24 thus advances relative to the spindle 23 against the elastic force of the disc spring 29. The collet 28 thus releases the stud bolt 1b to eject the tool 1 from the spindle hole 23g.

According to the machine tool 10 of the present embodiment, the drawbar 24 advances relative to the spindle 23 by merely retracting the ram 21 with the feed unit 38, thereby the tool 1 is unclamped. Similarly, by simply advancing the ram 21 with the feed unit 38, the drawbar 24 clamps the tool 1. The machine tool 10 allows tool exchange with a simple structure. The machine tool 10 performs operations such as drilling, tapping, and milling by further advancing the ram 21.

The unclamp pin 35 is directly mounted on the frame 11. The drawing force applied by the disc spring 29 to the drawbar 24 is thus increased.

The drive shaft 15 is supported at both ends by the bearing 14 and the spindle 23. This suppresses a runout of the drive shaft 15. This increases the rotation speed of the spindle 23.

As shown in FIG. 3, the coolant supplied from the supply port 15d is delivered to the tool 1 through the coolant channels 15c, 25c, 33a, 27b, and the collet 28. The machine tool 10 thus supplies coolant to the cutting point from the distal end of the cutting edge of the tool 1 or between the cutting edge and the tool holder via the tool holder.

The support shaft 15b is supported by the guide block 26. The guide block 26 is integrated with the drawbar 24. The coolant channel 15c is directly connected to the coolant channels 25c and 27b of the drawbar 24. Thus, the coolant channel 15c has fewer connection points and less cross-sectional variation. This reduces pressure loss of coolant. If the coolant is mist, mist separation is also suppressed.

### Second Embodiment

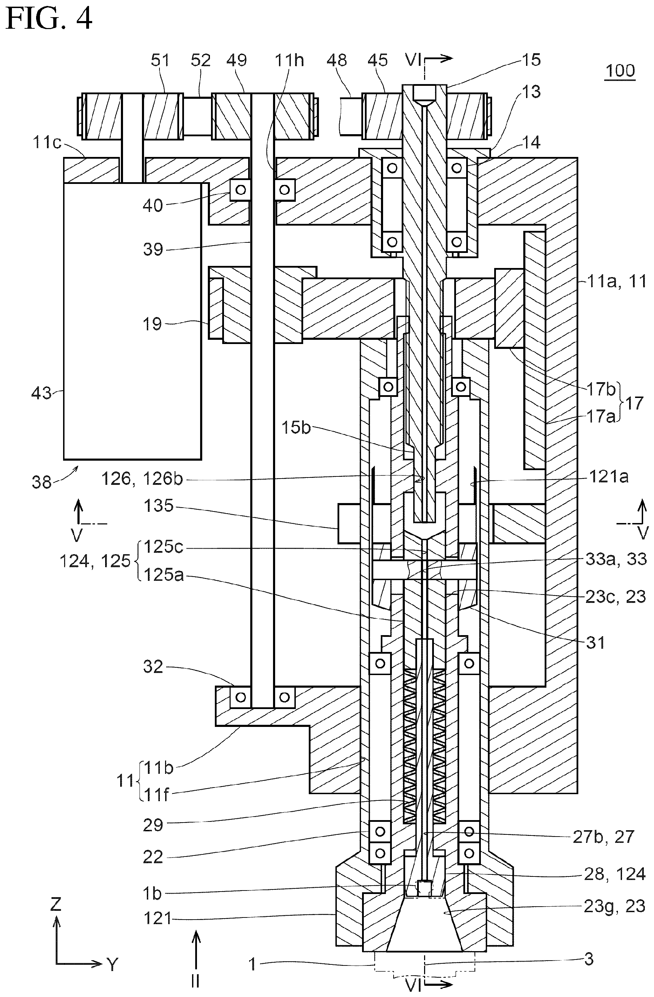

As shown in FIGS. 4 to 6, a machine tool 100 according to the present embodiment includes a ram 121, a guide block 126, a drawbar 124, and a trigger block (trigger) 135. Other configurations are substantially the same as the machine tool 10 of the first embodiment.

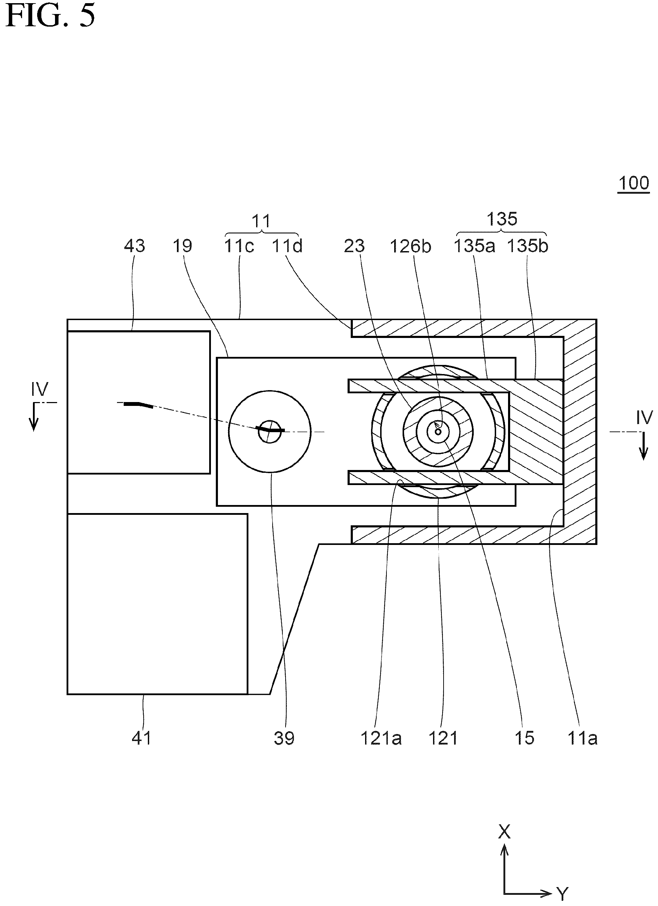

FIG. 4 is a sectional view taken along line IV-IV in FIG. 5.

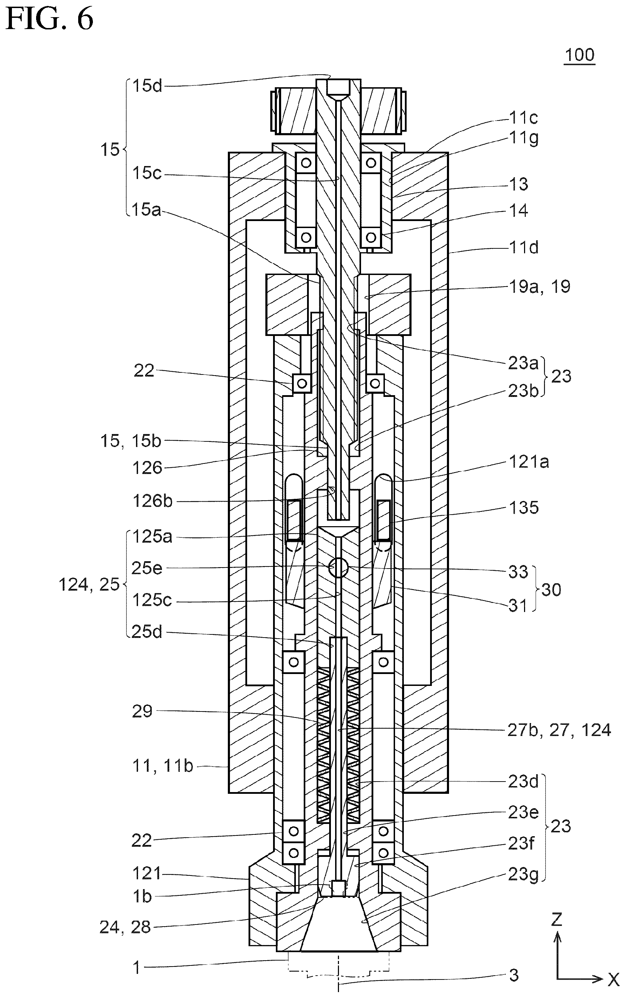

The ram 121 includes a trigger hole 121a. As shown in FIG. 5, the ram 121 has a pair of trigger holes 121a in the lateral direction (X direction) about the center axis 3. The trigger holes 121a penetrate the ram 121 in the vertical direction (Y direction). As shown in FIG. 6, the trigger holes 121a extend in the front-rear direction (Z direction). Other configurations of the ram 121 are substantially the same as those of the ram 21 of the first embodiment.

As shown in FIG. 4, the guide block 126, which is a hollow cylinder, is integrated with the spindle 23. The guide block 126 includes a guide hole 126b. The guide hole 126b extends along the center axis 3. The guide hole 126b supports the support shaft 15b. The support shaft 15b slides axially relative to the guide hole 126b.

The drawbar 124 includes a draw block 125, a draw shaft 27, and a collet 28. The drawbar 124 reciprocates independently of the guide block 126 inside the spindle 23. The draw block 125 includes a body 125a, a coolant channel 125c, a shaft support hole 25d, and a pin fixing hole 25e. The body 125a is separate from the guide block 126. The coolant channel 125c is substantially the same as the coolant channel 25c of the first embodiment.

As shown in FIG. 5, the trigger block 135 is U-shaped in front view. The trigger block 135 is disposed on the base plate 11a. The trigger block 135 includes a pair of triggers 135a and a connection block 135b. As shown in FIG. 5, the triggers 135a are rectangular plates. As shown in FIG. 5, the triggers 135a extend in the vertical direction (Y direction) to penetrate the trigger holes 121a. The connection block 135b, which connects the pair of triggers 135a, is fastened to the base plate 11a.

According to the machine tool 100 of the present embodiment, an area moment of inertia in the front-rear direction (Z direction) of the trigger 135a increases. The elastic force of the disc spring 29 is thus increased more than the machine tool 10 of the first embodiment.

### Third Embodiment

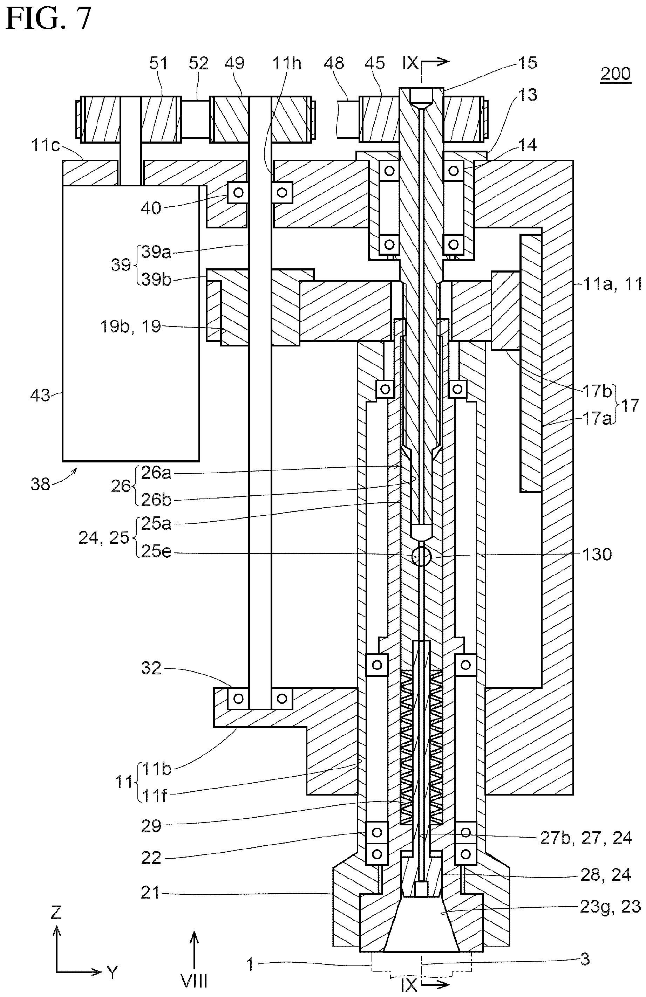

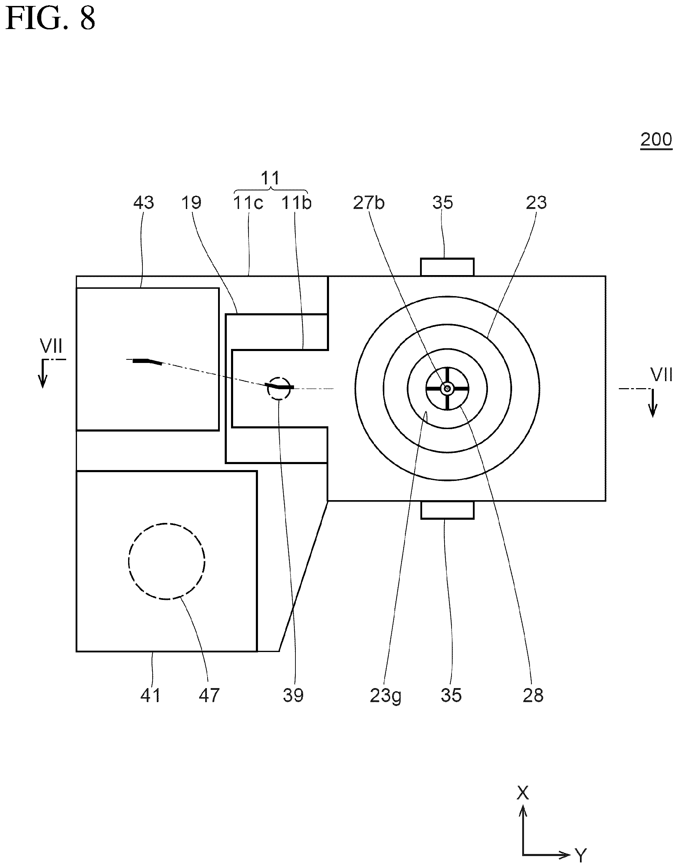

As shown in FIGS. 7 to 9, a machine tool 200 according to the present embodiment includes a lever 130 in place of the lever 30. The lever 130 is substantially the same as the ring pin 33 of the machine tool in the first embodiment. Other configurations of the machine tool 200 are substantially the same as those of the machine tool 10 in the first embodiment.

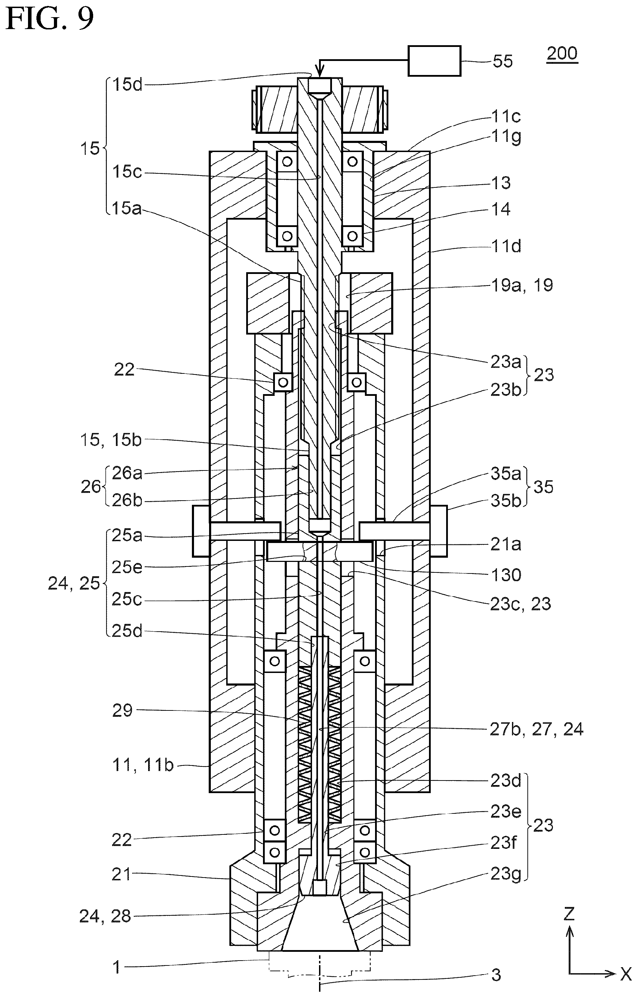

As shown in FIG. 9, a pair of unclamp pins (triggers) 35 extend from left and right (X direction) toward the center axis 3. The unclamp pin 35 includes a head 35b and a pin (side column) 35a. The head 35b is fixed to the side plate 11d. The pin 35a is disposed on a ZX plane passing through the center of the spindle 23. The pin 35a has a circular or rectangular cross-section. If the pin 35a has a rectangular cross-section, the pin 35a has a contact surface (not shown) parallel to the XY plane. The pin 35a penetrates the trigger hole 21a to protrude into the ram 21. When a rotational phase of the spindle 23 is at the origin and the ram 21 retracts, the pin 35a contacts the lever 130.

When the feed unit 38 retracts the ram 21 toward the basal end, the lever 130 contacts the unclamp pin 35. As the feed unit 38 continues to retract the ram 21 toward the basal end, the lever 130 is pressed by the unclamp pin 35. This causes the drawbar 24 to move forward relative to the spindle 23 against the elastic force of the disc spring 29. The collet 28 thus opens the stud bolt 1b to eject the tool 1 from the spindle hole 23g.

### Fourth Embodiment

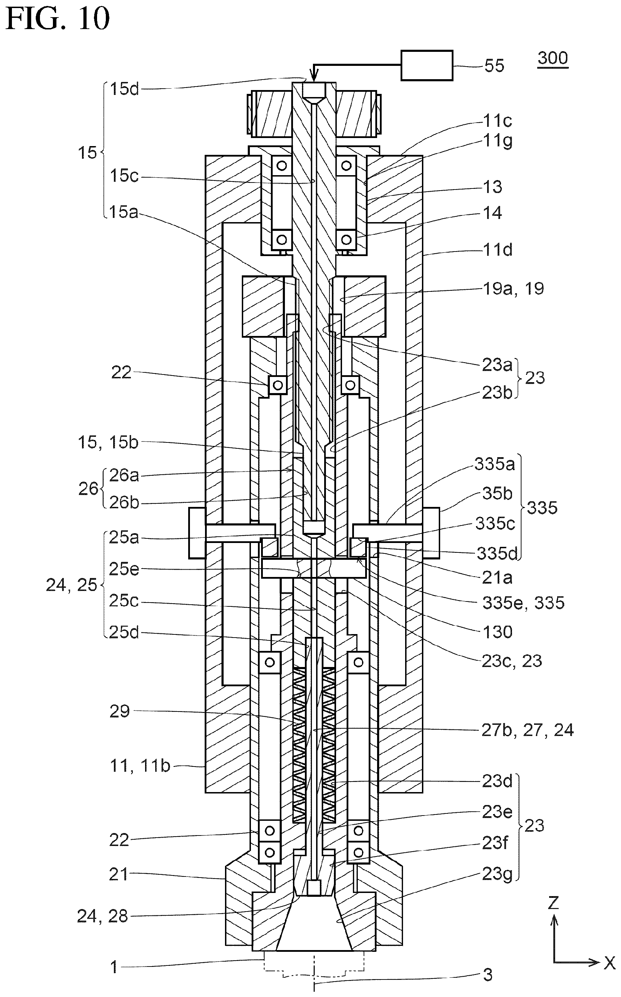

FIG. 10 is a sectional view of a machine tool 300 according to the present embodiment taken on the ZX plane passing through the center of the spindle 23. As shown in FIG. 10, the machine tool 300 includes a trigger 335. Other configurations of the machine tool 300 are substantially the same as those of the machine tool 200 of the third embodiment.

The trigger 335 includes a head 35b, a pin (side column) 335a, a mounting surface 335c, and a trigger ring 335d. The pin 335a is substantially the same as the pin 35a of the third embodiment. The mounting surface 335c is located on the inner radial end in the distal end direction (-Z direction). The mounting surface 335c is parallel to the XY plane. The trigger ring 335d is annular with a rectangular cross-section. The trigger ring 335d is disposed between the ram 21 and the spindle 23. The trigger ring 335d has an outer diameter slightly smaller than the inner diameter of the ram 21. The trigger ring 335d has an inner diameter slightly larger than the outer diameter of the spindle 23. The trigger ring 335d is arranged on the mounting surface 335c. The trigger ring 335d is arranged on the basal end side of the lever 130. The trigger ring 335d includes a contact surface 335e. The contact surface 335e is a distal end surface of the trigger ring 335d. The contact surface 335e contacts the lever 130 when the ram 21 retracts.

According to the present embodiment, the tool 1 can be unclamped regardless of the rotational phase of the spindle 23 when the spindle 23 retracts and the trigger 335 contacts the lever 130.

### Fifth Embodiment

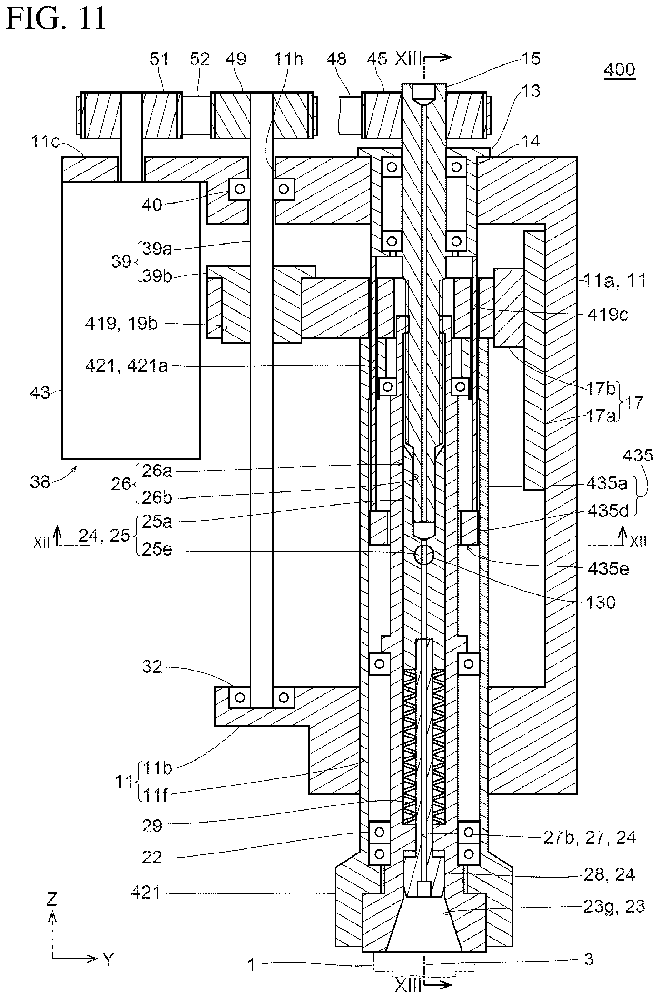

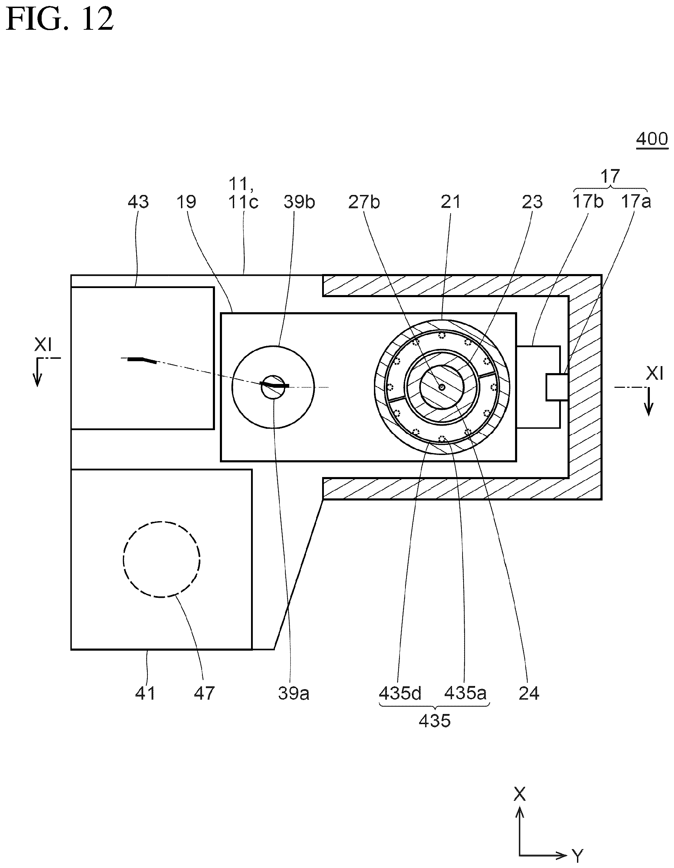

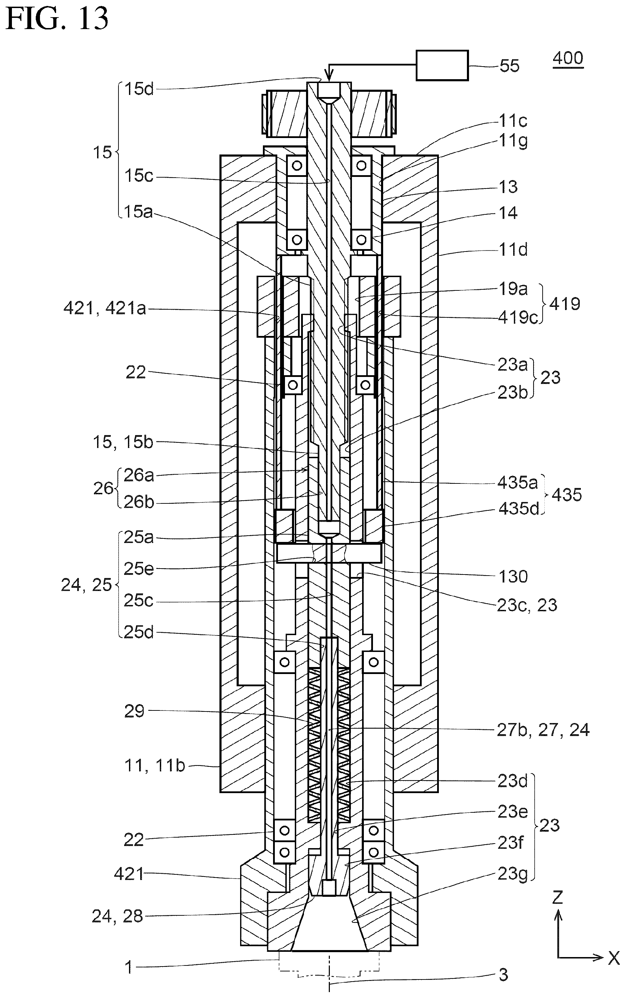

As shown in FIGS. 11 to 13, a machine tool 400 according to the present embodiment includes a ram 421, a connection block 419, and a trigger 435. Other configurations of the machine tool 400 are substantially the same as the machine tool 200 of the third embodiment. FIG. 11 is a combined sectional view taken along line XI-XI in FIG. 12.

The ram 421 includes multiple bottom holes 421a. The bottom holes 421a are located at the basal end of the ram 421. The bottom hole 421a extends in the Z direction. The bottom hole 421a has a circular in cross-section. The ram 421 does not include a trigger hole 21a. Other configurations of the ram 421 are substantially the same as those of the ram 21 of the first embodiment.

The connection block 419 includes multiple through holes 419c. The through hole 419c extends in the Z direction. Each of the through holes 419c is connected to the bottom holes 421a. The cross-section of the through hole 419c is the same as the bottom hole 421a. Other configurations of the connection block 419 are the same as the connection block 19 of the first embodiment.

The trigger 435 includes a plurality (twelve in the present embodiment) of stems 435a and a trigger ring 435d. The stem 435a, which has a circular cross-section, extends in the Z direction. The stem 435a penetrates both the bottom hole 421a and through hole 419c to be supported by the housing 13. As shown in FIG. 12, the trigger ring 435d is split into two in the circumferential direction. The trigger ring 435d is supported by the stems 435a. The trigger ring 435d includes a contact surface 435e. Other configurations of the trigger ring 435d are substantially the same as the trigger ring 335d of the fourth embodiment.

According to the machine tool 400 of the present embodiment, the collet 28 can unclamp the tool 1 regardless of the rotational phase of the spindle 23 when the spindle 23 retracts and the trigger 435 contacts the lever 130.

The present invention is not limited to the above embodiments and may be modified in various ways without departing from the spirit of the invention. All technical aspects described in the claims are within the scope of the present invention. Although exemplary embodiments are provided, those skilled in the art can derive alternatives, modifications, and improvements from the disclosure, which also fall within the scope of the attached claims.

### Reference Signs List

10, 100 Machine tool
11 Frame
21, 121 Ram
21a, 121a Trigger hole
23 Spindle
23c Lever hole
24 Drawbar
30, 130 Lever
35, 135, 335, 435 Trigger
38 Feed unit

## Claims

1. A machine tool (10, 100, 200, 300, 400), comprising:
a frame (11);
a hollow ram (21, 421) disposed on the frame (11) in a reciprocable manner;
a hollow spindle (23) to which a tool (1) is mountable, the spindle (23) rotatably supported by the ram (21, 421), the spindle (23) having a lever hole (23c) penetrating the spindle (23) in a radial direction and extending in an axial direction;
a drawbar (24) including a collet (28), the drawbar (24) configured to reciprocate in the spindle (23), the drawbar (24) configured to be urged toward a basal end of the spindle (23);
a lever (30, 130) connected to the drawbar (24), the lever (30, 130) extending radially outward of the spindle (23) through the lever hole (23c);
a trigger (35, 335, 435) fixed to the frame (11);
a feed unit (38) configured to reciprocate the ram (21, 421), the feed unit (38) configured to advance the ram (21, 421) toward a distal end to machine a workpiece, the feed unit (38) configured to retract the ram (21, 421) toward a basal end to bring the lever (30, 130) into contact with the trigger (35, 335, 435) for the drawbar (24) to advance with respect to the spindle (23) to open the collet (28).

2. The machine tool (10, 100, 200, 300, 400) according to claim 1, wherein the feed unit (38) advances the ram (21, 421) toward the distal end for the drawbar (24) to retract with respect to the spindle (23) to close the collet (28).

3. The machine tool (200, 300) according to claim 1 or 2, wherein
the ram (21) includes a side hole (21a) penetrating the ram (21) in a radial direction and extending in an axial direction, and
the trigger (35, 335) includes a side column (35a, 335a) extending perpendicular to the spindle (23) to penetrate the side hole (21a).

4. The machine tool (200, 300) according to any one of claims 1 to 3, wherein
the trigger (335, 435) includes a trigger ring (335d, 435d) disposed inside the ram (21, 421).

5. The machine tool (400) according to any one of claims 1 to 3, wherein
the ram (421) includes a bottom hole (421a) extending parallel to the spindle (23) to penetrate from an inside of the ram (421) to a basal end of the ram (421), and
the trigger (435) includes a support column (435a) extending parallel to the spindle (23) to penetrate the bottom hole (421a).

6. The machine tool (200, 300, 400) according to any one of claims 1 to 5, wherein
the drawbar (24) includes
a draw shaft (27) connected to the collet (28), and
a draw block (25a) connected to the draw shaft (27) at the basal end, and the lever (30, 130) penetrates the draw block (25a).

7. The machine tool (10, 100) according to any one of claims 1 to 5, wherein the lever (30) includes an unclamp ring (31) disposed radially outside of the spindle (23), the unclamp ring (31) connected to the drawbar (24) through the lever hole (23c).

8. The machine tool (10, 100) according to claim 7, wherein
the drawbar (24) includes
a draw shaft (27) connected to the collet (28), and
a draw block (25a) connected to the draw shaft (27) at the basal end, and the lever (130) includes a lever pin (33) penetrating the draw block (25a).

9. The machine tool (200, 300, 400) according to any one of claims 1 to 8, wherein
the spindle (23) includes a spline hole (23a) at a basal end,
the machine tool (200, 300, 400) further comprises a spindle drive shaft (15) including a spline shaft (15a) inserted into the spline hole (23a) to be engaged with the spline hole (23a) to transmit rotation,
the frame (11) includes
a ram support plate (11b) supporting a distal end of the ram (21, 421) slidably in a front-rear direction, and
a drive shaft support plate (11c) supporting the spindle drive shaft (15) in a rotatable manner.

10. The machine tool (200, 300, 400) according to any one of claims 1 to 9, further comprising:
a linear guide (17) extending parallel to the spindle (23), the linear guide (17) disposed on the frame (11); and
a connection block (19, 419) guided by the linear guide (17), the connection block (19, 419) connected to the ram (21, 421) in a reciprocable manner.
